# EUROPÄISCHE PATENTSCHRIFT

(11) **EP 2 570 028 B1**
(45) Veröffentlichungstag und Bekanntmachung des Hinweises auf die Patenterteilung: **24.09.2014**
(21) Anmeldenummer: 12181479.2
(22) Anmeldetag: 23.08.2012
(51) Int. Cl.: A01N 25/26, A01N 59/00, A01P 13/00, E01H 11/00, E04B 1/72

(54) **Pflanzenwachstumshemmende, rieselfähige Kompositpartikel sowie deren Verwendung**
Free-flowing composite particle for inhibiting plant growth and use of same
Particules composites pouvant s'écouler inhibant la croissance des plantes ainsi que leur utilisation

(30) Priorität: 15.09.2011 DE 102011053650
(43) Veröffentlichungstag der Anmeldung: 20.03.2013
(73) Patentinhaber: Gebrüder Dorfner GmbH & Co. Kaolin- und Kristallquarzsand-Werke KG, 92242 Hirschau (DE)
(72) Erfinder: Kuhnt, Mathias, 92253 Schnaittenbach (DE)
(74) Vertreter: Hannke, Christian

(56) Entgegenhaltungen:
- EP-A1- 0 625 129
- WO-A1-2005/025316
- CA-A1- 1 200 655
- DE-U1-202007 014 013
- GB-A- 1 087 767
- KR-A- 20110 012 352
- DATABASE WPI Week 199325 Thomson Scientific, London, GB; AN 1993-199658 XP002685798, -& JP 5 123063 A (YAMAKAWA SANGYO KK) 21. Mai 1993 (1993-05-21)
- WANG JINA ET AL: "Properties of sodium silicate bonded sand hardened by microwave heating", CHINA FOUNDRY, Bd. 6, Nr. 3, 1. August 2009 (2009-08-01), Seiten 191-196, XP55041728,
- Zitian Fan ET AL: "Dry reusing and wet reclaiming of used sodium silicate sand", CHINA FOUNDRY, 1. Februar 2005 (2005-02-01), Seiten 38-43, XP55042030, China Gefunden im Internet: URL:http://www.foundryworld.com/uploadfile /20094857757581.pdf [gefunden am 2012-10-24]
- Z T FAN, N Y HUANG, X P DONG: "In house reuse and reclamation of used foundry sands with sodium silicate binder", INTERNATIONAL JOURNAL OF CAST METALS RESEARCH, Bd. 17, Nr. 1, 1. Januar 2004 (2004-01-01) , Seiten 51-56, XP009164034,

## Beschreibung

Die Erfindung betrifft pflanzenwachstumshemmende, rieselfähige Kompositpartikel bestehend aus einem anorganischen, mineralischen Trägermaterial auf Siliziumbasis, welches eine mittlere Partikelgröße von 0,01 µm bis 5 mm aufweist, und einer das anorganische, mineralische Trägermaterial zumindest teilweise umschließende, anorganische Oberflächenbeschichtung, welche wenigstens eine Alkalisilikatverbindung, ausgewählt aus Natriumsilikat, Kaliumsilikat oder Lithiumsilikat und/oder einer Mischung hieraus, aufweist, wobei die Oberflächenbeschichtung wenigstens eine vernetzte Silikatkomponente aufweist. Zudem betrifft die Erfindung die Verwendung der erfindungsgemäßen Kompositpartikel als Fugenfüllmaterial im Außenbereich.

Die Unkrautvernichtung ist jedem Hobbygärtner als auch jeder öffentlichen Institution ein wichtiges Anliegen. Besonders im Bereich von gepflasterten oder geplatteten Wegen sind die besonders aus den Fugen heraus wachsenden Pflanzen nachteilig für die Trittfestigkeit, Belastbarkeit und die Stabilität der Pflastersteine und Gehwegplatten. Die Wurzelwerke dieser unerwünschten Pflanzen, meist als Unkraut bezeichnet, bedingen eine Anhebung der Wegplatten oder Bodensteine aus der ursprünglichen Ausrichtung, wodurch das Laufen erschwert wird und es sogar zu Stürzen und Verletzungen kommen kann.

Um gegen derartiges unerwünschtes Pflanzenwachstum vorzugehen, bestehen derzeit zwei Möglichkeiten. Zum einen können die Pflanzen chemisch mit Pflanzenvertilgungsmitteln vernichtet werden, wobei sich diese Mittel häufig auch gesundheitsschädlich auf Mensch und Nutztier auswirken und somit eher als umweltschädlich einzustufen sind. Alternativ besteht die Möglichkeit, in meist wöchentlichen Abständen, das Unkraut manuell, mechanisch per Hand unter Zuhilfenahme eines Messers zu entfernen. Hierbei besteht jedoch die Gefahr, dass zumeist nur die jungen Blattriebe abgezupft und entfernt werden und der Wurzelbereich der unerwünschten Pflanze weiter intakt bleibt. Gerade dieses manuelle Herausziehen des Unkrauts ist extrem zeitaufwendig und mühsam. Zudem muss es, wie oben erwähnt, in regelmäßigen Zeitabständen wiederholt werden, um eine Beschädigung des Wegbereiches zu verhindern und die Fugen von Unkraut frei zu halten.

EP 0 625 129 A1 offenbart ein rieselförmiges mineralisches Kompositmaterial. Dieses enthält ein Trägermaterial, wie z.B. Quarzsand oder Glassand. Dieses Trägermaterial wird mit einer Komponente, wie Kieselsol, Borsäure oder Phosphorsäure sowie einer weiteren Komponente, wie Natronwasserglas, Kaliwasserglas oder Lithiumpolysilikat vermischt. Es entsteht somit eine feuchtrieselfähige Mischung, zu der eine weitere Komponente, wie beispielsweise Pigmentierungsmittel enthaltende Stoffe und Natriummethasilikat gegeben werden. Durch Zugabe von Kieselsol entsteht ein rieselfähiger körniger Sand, welcher eine alkalisilikathaltige Oberflächenbeschichtung besitzt.

DATABASE WPI Week 199325 Thomson Scientific, London, GB; AN 1993-199658, XP002685798 zeigt ein granuläres poröses Kompositmaterial auf der Basis eines Sandes als Trägermaterial, welches mit einem Additiv wie Kohle, Holzmehl, Stärke, Diatomeenerde und Natriumsilikat bei 700-1100°C gesiedet wird. Es werden Partikel von einer Größe von 3-30 mm Durchmesser erhalten. Diese Partikel können in einer Schichtdicke von 3-5 cm auf dem Boden ausgebracht werden und das Wachstum von Unkraut über lange Zeit wirksam unterdrücken. Durch Zugabe von Eisenoxid-Pigmenten kann eine rot-braune Färbung der Partikel erzielt werden.

GB 1 087 767 A offenbart einen Giesereisand auf der Basis von Siliziumdioxid, Silimanit oder Olivin. Das Basismaterial wird mit Natriumsilikat beschichtet und thermisch bei 160-250°C behandelt. Hierbei agiert das Silikat als Bindemittel und es kann eine aus mit Silikat beschichtetem Sand bestehende Gussform hergestellt werden.

WANG JINA ET AL "Properties of sodium silicate bonded sand hardened by microwave heating" offenbart die Behandlung von Sand mit Natriumsilikat in einem Mikrowellenofen. Die Proben wurden in einer zylindrischen Form hergestellt. Die Oberflächenstabilität der Proben wurde bei verschiedenen Umgebungsfeuchtigkeiten erprobt. Es konnte gezeigt werden, dass es zu teilweise hoher Wasseraufnahme kommt, wodurch der Zusammenhalt der silikatbeschichteten Sandpartikel abnimmt.

CA 1 200 655 A1 zeigt die Verwendung von Natrium-/Litiumsilikat zur Beschichtung von Sand für Gießereizwecke. Hierzu werden die Sandpartikel mit einer wässrigen Lösung von Natrium-/Litiumsilikat gemischt und dann durch Erhitzen auf 150-300°C innig miteinander verbunden. Hierbei entsteht ein Silikatfilm auf den Sandkörnern, wobei die Oberflächenfilme verschiedener Körner miteinander vernetzt sind.

Zitian Fan ET AL "Dry reusing and wet reclaiming of used sodium silicate sand" offenbart Methoden zur Wiederaufarbeitung von Gießereisand. Zur Herstellung der Gussform wurden vier Gew% Natriumsilikat verwendet. Die Sandformen werden hierbei nach Gebrauch auf Partikelgröße gebrochen, anhaltendes Metall mit Hilfe eines Magneten entfernt und schließlich entstaubt. Bei der trockenen Aufarbeitung wird die Oberflächenschicht zu lediglich etwa 25% abgetragen. Die bei der trockenen Aufarbeitung anfallenden Sandpartikel besitzen eine Oberflächenbeschichtung aus Natriumsilikat, die fest mit den Sandpartikeln verbunden ist.

Z T FAN, N Y HUANG, X P DONG "In house reuse and reclamation of used foundry sands with sodium silicate binder" zeigt, dass mit Silikat (ca. 3 Gew%) beschichtete Gießereisande über eine feste chemische Verbindung des Silikats an die Oberfläche des mineralischen Trägers verfügen.

KR 2011 0012352 A betrifft einen Partikel mit einem silitiumbasierten Kern, wie beispielsweise Kaolin. Dieser Kern ist mit einem Alkalisilikat überzogen. Des Weiteren ist beispielsweise ein Herbizid zugegeben.

WO 2005/025316 A1 offenbart die Kontrolle des Wachstums von Unkräutern in Fugen mittels eines Füllsandes, welcher aus einer Mischung von Quarzsand und Natriumsilikat besteht. Mit einer solchen Mischung kann ein pH-Wert von über 11 erzielt werden, welcher zu einer Hemmung des Pflanzenwachstums führt. Die Mischung neigt nach dem Füllen in Fugen durch die unterschiedliche Dichte der Partikel zur Phasentrennung, wobei die leichtere Silikatschicht im oberen Teil der Fuge zu liegen kommt.

DE 20 2007 014013 U1 zeigt eine Flüssigfolie zur Befreiung von mineralischen Oberflächen und Fugen von Algenbewuchs, Flechten, Moosen und Pilzen bestehend aus Kaliwasserglas, Glycerin und Siloxanen.

Demzufolge liegt der vorliegenden Erfindung die Aufgabe zugrunde, dass pflanzenwachstumhemmende Zusammensetzungen zum Füllen von Fugen bereitgestellt werden sollen, welche nicht zur Entmischung neigen.

Diese Aufgabe wird gemäß den Merkmalen des Patentanspruches 1 und 8 gelöst.

Ein wesentlicher Punkt der Erfindung liegt darin, dass erfindungsgemäß pflanzenwachstumshemmende, rieselfähige Kompositpartikel bestehend aus einem anorganischen, mineralischen Trägermaterial auf Siliziumbasis, welches eine mittlere Partikelgröße von 0,01 µm bis 5 mm aufweist, und einer das anorganische, mineralische Trägermaterial zumindest teilweise umschließende, anorganische Oberflächenbeschichtung, welche wenigstens eine Alkalisilikatverbindung, ausgewählt aus Natriumsilikat, Kaliumsilikat oder Lithiumsilikat und/oder einer Mischung hieraus, aufweist, wobei die Oberflächenbeschichtung wenigstens eine vernetzte Silikatkomponente aufweist bereitgestellt werden, wobei die vernetzte Silikatkomponente der Oberflächenbeschichtung über chemische Bindungen fest an dem anorganischen, mineralischen Trägermaterial angeordnet ist, wobei eine weitere ionische Komponente der Oberflächenbeschichtung, bestehend aus Na⁺, K⁺ oder Li⁺ oder einer Mischung hieraus, in wässriger Umgebung beweglich angeordnet ist.

Die erfindungsgemäßen Kompositpartikel basieren auf einem anorganischen, mineralischen Trägermaterial. Dies ist vorteilhaft, da dieses Trägermaterial witterungsbeständig und zudem kostengünstig bereitstellbar ist. Das Trägermaterial ist auf Siliziumbasis ausgebildet, wie beispielsweise Silikate. Besonders bevorzugt ist das Träger-material aus Siliziumdioxid ausgebildet und meist bevorzugt als Quarzsand ausgebildet.

Je nach Wahl des Trägermaterials ist dessen mittlere Partikelgröße in einem Bereich von 0,01 µm bis 5 mm ausgebildet. Das Trägermaterial ist zudem in seiner Morphologie frei ausgebildet. So können beispielsweise faserartige, plättchenartige, stäbchenartige, nadelartige, kornartige, runde, kantige, im Wesentlichen runde oder ovale Trägermaterialien oder eine Mischung daraus vorgesehen sein, ist jedoch nicht hierauf beschränkt.

Das Trägermaterial ist zumindest teilweise von einer Oberflächenbeschichtung umschlossen, welche wenigstens eine anorganische Alkalisilikatverbindung aufweist. Vorteilhaft wird diese Alkalisilikatverbindung aus der Gruppe Natriumsilikat und/oder Kaliumsilikat und/oder Lithiumsilikat und/oder Mischungen hieraus ausgewählt. Bevorzugt findet Natriumsilikat bzw. Natronwasserglas Anwendung.

Ferner ist denkbar, die Oberflächenbeschichtung aus Mischungen der oben genannten Alkalisilikatverbindungen bereitzustellen, wie beispielsweise Natriumsilikat/Kaliumsilikat-Mischungen, Natriumsilikat/Lithiumsilikat-Mischungen, Kaliumsilikat/Lithiumsilikat oder Natriumsilikat/Kaliumsilikat/Lithiumsilikat-Mischungen, wobei die Massenverhältnisse hierbei frei wählbar sind. Vorteilhaft ist der Gewichtsanteil an Lithiumsilikat, bezogen auf die Gesamtmasse der Oberflächenbeschichtung, am geringsten ausgebildet. Bevorzugt ist der Gewichtsanteil an Natriumsilikat bezogen auf die Gesamtmasse der Beschichtung am größten ausgebildet.

Der Einsatz von wenigstens einer Alkalisilikatverbindung in der Oberflächenbeschichtung ist vorteilhaft, da Alkalisilikatverbindungen sowohl eine Silikatkomponente als auch eine Alkalikomponente aufweisen.

Die Silikatkomponente ist vorteilhaft, da diese vernetzbar ausgebildet ist. So kann unter Zugabe geeigneter Säuren bzw. Basen ein Vernetzungsprozess initiiert werden, welcher zum einen eine Vernetzung der Silikatkomponente innerhalb der Oberflächenbeschichtung bedingt und zudem zeitgleich auch die Vernetzung der Silikatkomponente mit der Oberfläche des Trägermaterials erzeugt. Erfindungsgemäß ist die Silikatkomponente der Oberflächenbeschichtung über chemische Bindungen fest an dem anorganischen, mineralischen Trägermaterial angeordnet.

Unter fest ist hierbei dauerhaft wasserunlöslich zu verstehen.

Vorteilhaft ist die vernetzte Silikatkomponente als Gerüstnetzwerk ausgebildet und dient der Stabilisierung der Oberflächenbeschichtung gegenüber physikalischen oder chemischen Umgebungseinflüssen sowie der dauerhaften Bindung der Oberflächenbeschichtung am Trägermaterial. Vorteilhaft ist das Silikatgerüstnetzwerk der erfindungsgemäßen Oberflächenbeschichtung nicht kompakt ausgebildet, so dass sich Zwischenräume bedingen, in welchen vorteilhaft die Alkalikomponente ladungsstabilisierend angeordnet ist.

Werden nun die erfindungsgemäßen Kompositpartikel in wässrige Umgebung versetzt, wird die Alkalikomponente, welche aus Natriumkationen (Na⁺), Kaliumkationen (K⁺) oder Lithiumkationen (Li⁺) oder einer Mischung hieraus besteht, durch Wechselwirkungen mit dem Wasser aus den Zwischenräumen des Silikatgerüstnetzwerks herausgelöst. Die Alkalikationen sind somit nicht fest, sondern im Silikatgerüst bewegbar angeordnet. In Gegenwart von Wasser lösen sich die Alkalikationen aus dem Silikatgerüst heraus und reichern sich in der wässrigen Phase an, wo es zu Reaktionen mit den Hydroxidionen kommt und somit eine Basenbildung, als Natriumhydroxid, Kaliumhydroxid, Lithiumhydroxid oder einer Mischung hieraus bedingt wird.

Durch diese Basenbildung wirken die vorliegenden erfindungsgemäßen Kompositpartikel pflanzenwachstumshemmend. Hierunter ist zu verstehen, dass sich die Kompositpartikel negativ auf das Wachstum von Pflanzen auswirken bzw. dieses gänzlich unterbinden. Somit werden bereits bestehende Pflanzen in ihrem Wachstum gehemmt und sterben ab. Zugleich wird auch eine Neuansiedlung von Pflanzen verhindert. Es ist somit erfindungsgemäß gewünscht, dass die Alkalikomponente der Oberflächenbeschichtung bewegbar und somit auch aus dem Silikatgerüstnetzwerk, bevorzugt durch Wasser, herauslösbar ausgebildet ist so dass eine zeitabhängige Verarmung der Oberflächenbeschichtung an Alkalikomponente zu beobachten ist.

Weitere vorteilhafte Ausbildungen ergeben sich aus den Unteransprüchen.

Es weisen die erfindungsgemäßen Kompositpartikel in Gegenwart von Wasser einen pH-Wert im Bereich von 9 bis 12 auf, wobei der pH-Wert größer 9, mehr bevorzugt größer 10 und meist bevorzugt größer 11 ist. Dies ist vorteilhaft, da durch das kontinuierliche Herauslösen der Alkalikomponente aus der Oberflächenbeschichtung in Wassergegenwart, beispielsweise bei Regen, eine Erhöhung des pH-Wert des Wassers bedingt wird. Durch diese starke basische Eigenschaft des Wassers wird das Pflanzenwachstum beeinträchtigt und gehemmt. Ein hoher pH-Wert von größer 9 wirkt sich auf den Metabolismus der Pflanzen aus und bedingt beispielsweise eine reduzierte Photosynthesetätigkeit. Zudem werden die Pflanzen über das Wurzelwerk nicht mehr ausreichend mit Wasser und Nährstoffen versorgt, so dass ein Absterben bedingt wird. Vorteilhaft ist diese Wirkung umso stärker, je höher der pH-Wert der Kompositpartikel in wässriger Umgebung ist.

Es weist die Oberflächenbeschichtung der erfindungsgemäßen Kompositpartikel eine mittlere Schichtdicke im Bereich von 1 nm bis 1000 µm, bevorzugt von 10 nm bis 500 nm und besonders bevorzugt in einem Bereich von 50 nm bis 250 nm auf. Dies ist vorteilhaft, da die so beschichteten Kompositpartikel in ihrer Gesamtheit als Material eine sehr große spezifische Oberfläche aufweisen, wodurch durch diese geringen Schichtdicken der Oberflächenbeschichtung dennoch eine pflanzenwachstumshemmende Wirkung erzielt wird. Zudem sind derartig dünne Oberflächenbeschichtungen auf anorganischem Trägermaterial vorteilhaft, da diese eine im Wesentlichen glatte Oberfläche ausbilden und somit nahezu frei von Rissen oder Defekten sind.

Vorteilhaft wird die Oberflächenbeschichtung mittels Temperatur- oder Sprühverfahren oder auch nasschemisch und/oder physikalisch auf das Trägermaterial aufgebracht. Vorteilhaft wird die Oberflächenbeschichtungszusammensetzung zu dem Trägermaterial zugeführt, welches beispielsweise durch kontinuierliches Mischen beschichtet wird. Im Anschluss erfolgt eine Temperaturbehandlung der beschichteten Trägermaterialpartikel. Dies kann sowohl direkt als auch indirekt erfolgen. Bevorzugt erfolgt der Erwärmungschritt in einem Temperaturbereich von 100 bis 700 °C, bevorzugt in einem Bereich von 250 bis 500 °C und besonders bevorzugt in einem Bereich von 300 bis 450 °C. Bevorzugt weist die Oberflächenbeschichtungszusammensetzung vor dem Vermischungsschritt mit dem Trägermaterial wenigstens eine Alkalisilikatverbindung sowie geeignete Vernetzungsmittels, wie beispielsweise geeignete Säuren, bevorzugt Borsäure, und/oder Basen, bevorzugt Natriumhydroxid, auf, um eine Vernetzung der Silikatkomponente derart zu ermöglichen, dass das resultierende Silikatgerüstnetzwerk fest mit dem Trägermaterial in Verbindung steht, aber die Alkalikomponente dennoch loslösbar und bewegbar angeordnet ist.

Bei einer weiteren vorteilhaften Ausbildung weist die Oberflächenbeschichtung einen Silikatgehalt von 1 bis 10 Gewichts-% und bevorzugt von 2 bis 5 Gewichts-% bezogen auf die Gesamtmasse der Oberflächenbeschichtung auf. Dies ist vorteilhaft, da in diesem Bereich unter Einsatz geeigneter Vernetzungsmittel, ein besonders stabiles Silikatgerüstnetzwerk erzeugt wird. Dieses Silikatgerüstnetzwerk ist sowohl in sich stabil, also innerhalb der Oberflächenbeschichtung, als auch zu dem Trägermaterial stabil ausgebildet.

Würde man beispielsweise einen zu hohen Silikatgehalt wählen, beispielsweise größer 10 Gewichts-%, so würde sich ein extrem dichtes Silikatgerüst bedingen, welches die Alkalikationen fest einbindet und ein Herauslösen dieser Alkalikationen verhindert werden würde. In diesem Fall würde die pflanzenwachstumshemmende Wirkung der Kompositpartikel vermindert werden.

Würde man hingegen einen zu geringen Silikatgehalt wählen, so würde sich ein eher grobmaschiges Silikatgerüstnetzwerk ergeben, welches nicht dauerhaft fest mit dem Trägermaterial in Verbindung steht und beispielsweise durch Wassereinwirkung von dem Trägermaterial abgetrennt werden würde. Durch die Abtrennung der Oberflächenbeschichtung würde die pflanzenwachstumshemmende Wirkung der erfindungsgemäßen Kompositpartikel ebenfalls verloren gehen bzw. vermindert werden. Es wurde somit erfindungsgemäß festgestellt, dass der Silikatanteil der Oberflächenbeschichtung entscheidend die pflanzenwachstumshemmende Wirkung der erfindungsgemäßen Kompositpartikel beeinflusst.

Bei einer weiteren vorteilhaften Ausbildung der erfindungsgemäßen Kompositpartikel weist deren Oberflächenbeschichtung wenigstens eine anorganische und/oder organische farbgebende Komponente auf. Diese farbgebende Komponente ist beispielsweise als organischer Farbstoff oder auch als anorganisches Pigment ausgebildet. Vorteilhaft werden farbgebende Komponenten gewählt, welche während des Herstellungsverfahrens der erfindungsgemäßen Kompositpartikel intakt bleiben. Die erfindungsgemäßen Kompositpartikel weisen im einfachsten Fall eine transparente Oberflächenbeschichtung auf.

Vorteilhaft kann diese durch Einfärbung anwendungsspezifisch verändert werden, wobei jegliche Farbgestaltung möglich ist. Vorteilhaft wird die farbgebende Komponente in einem Bereich von 0,01 bis 35 Gewichts-%, bevorzugt in einem Bereich von 0,1 bis 20 Gewichts-% und besonders bevorzugt in einem Bereich von 0,5 bis 10 Gewichts-% bezogen auf die Gesamtmasse der Oberflächenbeschichtung eingesetzt.

Eine Einsatzmöglichkeit der erfindungsgemäßen Kompositpartikel liegt in der Verwendung als Fugenfüllmaterial für Fugen im Pflasterbereich, Bodenplattenbereich sowie für den Einsatz als Zusatzbestandteile für Kies, Splitt oder Schotter oder Mischungen hieraus.

Die erfindungsgemäßen Kompositpartikel sind durch ihre Rieselfähigkeit besonders leicht in Fugen zwischen Pflastersteinen oder auch Bodenplatten einbringbar. Dies ist vorteilhaft für eine einfache Verteilung der Kompositpartikel auch in kleine Frei- oder Zwischenräume. Die erfindungsgemäßen Kompositpartikel weisen eine hohe Beweglichkeit auf und lassen sich einfach verteilen und somit auch einfach handhaben. Zudem liegen die erfindungsgemäßen Kompositpartikel vereinzelt als Einzel-Kompositpartikel vor. Sowohl bei Herstellung als auch bei längerer Lagerung wird umgebungsunabhängig keine Agglomeratbildung, also der feste Zusammenschluss von meist mehreren Partikeln, beobachtet.

Als bekanntes, gängiges Fugenfüllmaterial im Außenbereich findet zumeist Sand Anwendung. Durch dessen lockere Anordnung in den Fugen können Pflanzen durch die sandgefüllte Fuge an die Oberfläche wachsen.

Die erfindungsgemäßen Kompositpartikel werden analog zu gängigem Fugensand verwendet. Sie können in Fugen jeglicher Art, beispielsweise durch Kehren oder Einstreuen, eingebracht werden. Somit sind die erfindungsgemäßen Kompositpartikel nicht nur für heimische Terrassen oder Hofanlagen einsetzbar, sondern sind speziell für alle gepflasterten oder plattenartigen Wegbefestigen, wie beispielsweise in öffentlich Parkanlagen, einsetzbar, um ununerwünschtes Unkrautwachstum zu vermeiden.

Vorteilhaft ist die pflanzenwachstumshemmende Wirkung der erfindungsgemäßen Kompositpartikel langzeitig, so dass der Unktrautwuchs innerhalb der Fugen dauerhaft verhindert wird. Somit wird eine deutliche Arbeitszeit- sowie Kostenersparnis bedingt, da weder eine chemische Behandlung noch langwieriges manuelles Unkrautzupfen bedingt werden. Zudem wirken sich die erfindungsgemäßen Kompositpartikel vorteilhaft auf die Stabilität, Belastbarkeit und Trittsicherheit der Bodenplatten und Wegsteine aus, da vorteilhaft störende Wurzelballenbildung ebenfalls verhindert wird.

Darüber hinaus ist vorstellbar, dass die erfindungsgemäßen Kompositpartikel nicht nur als Fugenmaterial zwischen benachbart angeordneten Platten oder Steinen, sondern auch unterhalb diesen als Vertikalsperre angeordnet sind. Somit wird das Pflanzenwachstum erfindungsgemäß nicht nur in den Fugen gehemmt, sondern auch großflächig unterhalb der entsprechenden Platten bzw. Steine. Dies ist vorteilhaft, da sich somit auch unterhalb der Steine bzw. Platten keine Wurzelballen ausbilden können, welche die Platten bzw. Steine bei Wachstum anheben und somit Trittsicherheit sowie Belastbarkeit reduzieren.

Vorteilhaft werden die erfindungsgemäßen Kompositpartikel als Fugenfüllmaterial eingesetzt, da sie leicht in Fugen zwischen Pflastersteinen, Bodenplatten oder Gehwegbefestigungen einbringbar sind. Durch die Geometrie des Trägermaterials wird eine möglichst dichte Anordnung innerhalb der Fugen bedingt, wobei auch Hohlräume zwischen den Kompositpartikeln erzeugt werden. Im Niederschlagsfall dringt das Regenwasser in die Fugen ein und kann durch die Hohlräume in das darunterliegende Erdreich abgeführt werden. Es kommt somit zu keiner Staunässe. Das Regenwasser hat somit eine Flussrichtung von oben kommend, durch das Fugenfüllmaterial hindurch in das Erdreich.

Vorteilhaft bedingt der Wasserkontakt der erfindungsgemäßen Kompositpartikel das Loslösen von Natriumkationen (Na⁺), Kaliumkationen (K⁺) oder Lithiumkationen (Li⁺) bzw. einer Mischung hieraus, aus der Oberflächenbeschichtung. Vorteilhaft reagiert diese bewegliche, ionische Komponente der Oberflächenbeschichtung mit dem Wasser unter Ausbildung eines entsprechenden Alkalihydroxids. Hierdurch wird eine Zunahme des pH-Wertes des Wassers bedingt.

Beim Auftreffen auf das Fugenmaterial weist das Regenwasser meist einen pH-Wert um 5 auf. Nach dem Durchfluss durch das Fugenmaterial weist das Regenwasser vorzugsweise einen erhöhten pH-Wert auf, welcher bevorzugt im Bereich von 9 bis 12 liegt. Dies ist vorteilhaft, da mit zunehmendem pH-Wert das Pflanzenwachstum auch stärker und schneller gehemmt wird.

Vorteilhaft erfolgt die Abgabe der beweglichen, ionischen Komponenten bei Regen aus der Oberflächenbeschichtung kontinuierlich und ist langzeitstabil. Bevorzugt wirken die erfindungsgemäßen Kompositpartikel pflanzenwachstumshemmend im Bereich von 6 Monaten bis 5 Jahren. Im einfachsten Fall, beispielsweise bei Neuverlegung von Gehwegplatten, erfolgt das Loslösen der Alkalikomponente aus der Oberflächenbeschichtung bei Regen linear, so dass die Konzentration der Alkalikationen innerhalb der Oberflächenbeschichtung linear abnimmt.

Darüber hinaus wäre auch denkbar, dass die Alkalikationen im Regenfall zu Beginn vermehrt aus der Oberflächenbeschichtung losgelöst werden und mit zunehmendem zeitlichem Verlauf weniger stark aus der Oberflächenbeschichtung herausgelöst werden. Dies ist vorteilhaft, wenn bereits gelegte, ältere Gehwegplatten lediglich ein neues Fugenfüllmaterial benötigen und bereits unerwünschtes Pflanzenwachstum zu beobachten ist. Durch die nach der Einfüllung der erfindungsgemäßen Kompositpartikel in die Fugen verstärkte Alkalikomponentenabgabe bei Regen, werden besonders bestehende Wurzelballen angegriffen, so dass bereits bestehendes Unkraut besonders schnell in seinem Wachstum gehemmt wird und eingeht. Somit ist die Verwendung der erfindungsgemäßen Kompositpartikel nicht nur auf neuangelegte Wege beschränkt, sondern kann problemlos auch in Fugen bestehender Gehwege oder Pflasterwege eingebracht werden.

Ferner ist denkbar, dass die erfindungsgemäßen Kompositpartikel mehr als eine Oberflächenbeschichtung aufweisen. So ist beispielsweise denkbar, dass das Trägermaterial einer erste Oberflächenbeschichtung, beispielsweise aus Kaliumsilikat, aufweist, welches wiederum von einer weiteren Oberflächenbeschichtung, beispielsweise aus Natronwasserglas, bevorzugt gänzlich, umschlossen ist. In diesem komplexeren Ausbildungsbeispiel weisen die erfindungsgemäßen Kompositpartikel eine Mehrzahl an zwiebelartig angeordneten Beschichtungen auf. Dies ist vorteilhaft, da somit die die zeitabhängige Freisetzung der Alkalikomponenten gesteuert werden kann, so dass bevorzugt die pflanzenwachstumshemmende Wirkung der erfindungsgemäßen Kompositpartikel verlängerbar ist.

## Patentansprüche

1. Pflanzenwachstumshemmende, rieselfähige Kompositpartikel bestehend aus einem anorganischen, mineralischen Trägermaterial auf Siliziumbasis, welches eine mittlere Partikelgröße von 0,01 µm bis 5 mm aufweist, und einer das anorganische, mineralische Trägermaterial zumindest teilweise umschließenden, anorganischen Oberflächenbeschichtung, welche wenigstens eine Alkalisilikatverbindung, ausgewählt aus Natriumsilikat, Kaliumsilikat oder Lithiumsilikat und/oder einer Mischung hieraus, aufweist, wobei die Oberflächenbeschichtung wenigstens eine vernetzte Silikatkomponente aufweist,
**dadurch gekennzeichnet, dass**
die vernetzte Silikatkomponente der Oberflächenbeschichtung über chemische Bindungen fest an dem anorganischen, mineralischen Trägermaterial angeordnet ist, wobei eine weitere ionische Komponente der Oberflächenbeschichtung, bestehend aus Na⁺, K⁺ oder Li⁺oder einer Mischung hieraus, in wässriger Umgebung beweglich angeordnet ist, wobei die Oberflächenbeschichtung einen Silikatgehalt von 1 bis 10 Gew.-% aufweist, wobei der pH-Wert der Kompositpartikel in Gegenwart von Wasser im Bereich von 9 bis 12 liegt und die Oberflächenbeschichtung eine mittlere Schichtdicke von 1 nm bis 1000 µm aufweist.

2. Pflanzenwachstumshemmende, rieselfähige Kompositpartikel nach Anspruch 1,
**dadurch gekennzeichnet, dass**
der pH-Wert der Kompositpartikel in Gegenwart von Wasser einen Wert größer 10 aufweist.

3. Pflanzenwachstumshemmende, rieselfähige Kompositpartikel nach Anspruch 2,
**dadurch gekennzeichnet, dass**
der pH-Wert der Kompositpartikel in Gegenwart von Wasser einen Wert größer 11 aufweist.

4. Pflanzenwachstumshemmende, rieselfähige Kompositpartikel nach Anspruch 1 - 3,
**dadurch gekennzeichnet , dass**
die Oberflächenbeschichtung eine mittlere Schichtdicke von 10 nm bis 500 nm aufweist.

5. Pflanzenwachstumshemmende, rieselfähige Kompositpartikel nach Anspruch 4,
**dadurch gekennzeichnet, dass**
die Oberflächenbeschichtung eine mittlere Schichtdicke von 50 nm bis 250 nm aufweist.

6. Pflanzenwachstumshemmende, rieselfähige Kompositpartikel nach Anspruch 1 bis 5,
**dadurch gekennzeichnet , dass**
die Oberflächenbeschichtung einen Silikatgehalt von 2 bis 5 Gew.-% aufweist.

7. Pflanzenwachstumshemmende, rieselfähige Kompositpartikel nach wenigstens einem der vorangegangenen Ansprüche,
**dadurch gekennzeichnet, dass**
die Oberflächenbeschichtungszusammensetzung weiterhin wenigstens eine anorganische und/oder organische farbgebende Komponente aufweist.

8. Verwendung von pflanzenwachstumshemmenden, rieselfähigen Kompositpartikeln bestehend aus einem anorganischen, mineralischen Trägermaterial auf Siliziumbasis, welches eine mittlere Partikelgröße von 0,01 µm bis 5 mm aufweist, und einer das anorganische, mineralische Trägermaterial zumindest teilweise umschließenden, anorganischen Oberflächenbeschichtung, welche wenigstens eine Alkalisilikatverbindung, ausgewählt aus Natriumsilikat, Kaliumsilikat oder Lithiumsilikat und/oder einer Mischung hieraus, aufweist, wobei die Oberflächenbeschichtung wenigstens eine mit dem Trägermaterial chemisch vernetzte Silikatkomponente von 1 bis 10 Gew.-% aufweist, wobei die Oberflächenbeschichtung eine mittlere Schichtdicke von 1 nm bis 1000 µm aufweist, wobei eine weitere ionische Komponente der Oberflächenbeschichtung, bestehend aus Na⁺, K⁺ oder Li⁺oder einer Mischung hieraus, in wässriger Umgebung beweglich angeordnet ist, und wobei der pH-Wert der Kompositpartikel in Gegenwart von Wasser im Bereich von 9 bis 12 liegt für den Einsatz als Füllmaterial für Fugen im Pflasterbereich, Bodenplattenbereich, für den Einsatz als Zusatzbestandteile in Kies-, Splitt- oder Schotterwegbefestigungen oder Mischungen hieraus.

9. Verwendung von pflanzenwachstumshemmenden, rieselfähigen Kompositpartikeln nach Anspruch 8,
**dadurch gekennzeichnet, dass**
die Kompositpartikel in Fugen zwischen Pflastersteinen, Bodenplatten oder Gehwegbefestigungen einbringbar sind und bei Regen mit Wasser vermischbar sind, so dass das Loslösen der beweglichen, ionischen Komponente aus der Oberflächenbeschichtung bedingt wird.

10. Verwendung von pflanzenwachstumshemmenden, rieselfähigen Kompositpartikeln nach Anspruch 7,
**dadurch gekennzeichnet, dass**
dass das Loslösen der ionischen Komponente in wässriger Umgebung eine Erhöhung des pH-Werts bedingt.

11. Verwendung von pflanzenwachstumshemmenden, rieselfähigen Kompositpartikeln nach Anspruch 10,
**dadurch gekennzeichnet, dass**
der pH-Wert auf einen Bereich größer 10 ansteigt.

12. Verwendung von pflanzenwachstumshemmenden, rieselfähigen Kompositpartikeln nach Anspruch 11,
**dadurch gekennzeichnet, dass**
der pH-Wert auf einen Bereich größer 11 ansteigt.

## Claims

1. Free-flowing composite particles inhibiting plant growth, consisting of an inorganic mineral carrier material based on silicon, which has an average particle size of from 0.01 µm to 5 mm, and an inorganic surface coating which surrounds the inorganic mineral carrier material at least in part and which has at least one alkali silicate compound selected from sodium silicate, potassium silicate or lithium silicate and/or a mixture thereof, wherein the surface coating has at least one cross-linked silicate component, **characterized in that** the cross-linked silicate component of the surface coating is arranged in a fixed manner on the inorganic mineral carrier material by way of chemical bonds, wherein a further ionic component of the surface coating, consisting of Na⁺, K⁺ or Li⁺ or a mixture thereof, is arranged so as to be movable in an aqueous environment, wherein the surface coating has a silicate content of from 1 to 10 % by weight, wherein the pH value of the composite particles is in the range of from 9 to 12 in the presence of water and the surface coating has an average coating thickness of from 1 nm to 1000 µm.

2. Free-flowing composite particles inhibiting plant growth according to claim 1, **characterized in that** the pH value of the composite particles has a value greater than 10 in the presence of water.

3. Free-flowing composite particles inhibiting plant growth according to claim 2, **characterized in that** the pH value of the composite particles has a value greater than 11 in the presence of water.

4. Free-flowing composite particles inhibiting plant growth according to claims 1 to 3, **characterized in that** the surface coating has an average coating thickness of from 10 nm to 500 nm.

5. Free-flowing composite particles inhibiting plant growth according to claim 4, **characterized in that** the surface coating has an average coating thickness of from 50 nm to 250 nm.

6. Free-flowing composite particles inhibiting plant growth according to claims 1 to 5, **characterized in that** the surface coating has a silicate content of from 2 to 5 % by weight.

7. Free-flowing composite particles inhibiting plant growth according to at least one of the preceding claims, **characterized in that** the composition of the surface coating additionally has at least one inorganic and/or organic colouring component.

8. Use of free-flowing composite particles inhibiting plant growth, comprising an inorganic mineral carrier material based on silicon, which has an average particle size of from 0.01 µm to 5 mm, and an inorganic surface coating which surrounds the inorganic mineral carrier material at least in part and which has at least one alkali silicate compound selected from sodium silicate, potassium silicate or lithium silicate and/or a mixture thereof, wherein the surface coating has at least one silicate component of from 1 to 10 % by weight cross-linked chemically with the carrier material, wherein the surface coating has an average coating thickness of from 1 nm to 1000 µm, wherein a further ionic component of the surface coating, consisting of Na⁺, K⁺ or Li⁺ or a mixture thereof, is arranged so as to be movable in an aqueous environment, and wherein the pH value of the composite particles is in the range of from 9 to 12 in the presence of water, for use as a filling material for joints in the field of plastering and the field of floor panels, for use as additional constituents in grit, stone chippings or gravel path fixings or mixtures thereof.

9. Use of free-flowing composite particles inhibiting plant growth according to claim 8, **characterized in that** the composite particles are capable of being introduced into gaps between paving stones, floor panels or pavement fixings and are miscible with water in the event of rain, so as to cause the detaching of the movable ionic component from the surface coating.

10. Use of free-flowing composite particles inhibiting plant growth according to claim 7, **characterized in that** the detaching of the ionic component in an aqueous environment causes an increase in the pH value.

11. Use of free-flowing composite particles inhibiting plant growth according to claim 10, **characterized in that** the pH value increases to a range greater than 10.

12. Use of free-flowing composite particles inhibiting plant growth according to claim 11, **characterized in that** the pH value increases to a range greater than 11.

## Revendications

1. Particules composites à écoulement libre, inhibitrices de croissance des plantes, constituées d'un matériau support minéral inorganique à base de silicium, qui présente une granulométrie moyenne de 0,01 µm à 5 mm, et d'un revêtement superficiel inorganique, entourant au moins partiellement le matériau support minéral inorganique, le revêtement qui comprend au moins un composé silicate alcalin choisi parmi le silicate de sodium, le silicate de potassium ou le silicate de lithium et/ou un mélange de ceux-ci, le revêtement superficiel comprenant au moins un composant silicate réticulé, **caractérisées en ce que** le composant silicate réticulé du revêtement superficiel est disposé, par l'intermédiaire de liaisons chimiques, fermement sur le matériau support minéral inorganique, un composant ionique supplémentaire du revêtement superficiel, consistant en Na⁺, K⁺ ou Li⁺ ou en un mélange de ceux-ci, étant disposé d'une manière mobile dans un environnement aqueux, le revêtement superficiel présentant une teneur en silicate de 1 à 10 % en poids, le pH des particules composites étant en présence d'eau compris dans la plage de 9 à 12, et le revêtement superficiel présentant une épaisseur moyenne de couche de 1 nm à 1000 µm.

2. Particules composites à écoulement libre, inhibitrices de croissance des plantes selon la revendication 1, **caractérisées en ce que** le pH des particules composites présente en présence d'eau une valeur supérieure à 10.

3. Particules composites à écoulement libre, inhibitrices de croissance des plantes selon la revendication 2, **caractérisées en ce que** le pH des particules composites présente en présence d'eau une valeur supérieure à 11.

4. Particules composites à écoulement libre, inhibitrices de croissance des plantes selon les revendications 1 à 3, **caractérisées en ce que** le revêtement superficiel présente une épaisseur moyenne de couche de 10 nm à 500 nm.

5. Particules composites à écoulement libre, inhibitrices de croissance des plantes selon la revendication 4, **caractérisées en ce que** le revêtement superficiel présente une épaisseur moyenne de couche de 50 nm à 250 nm.

6. Particules composites à écoulement libre, inhibitrices de croissance des plantes selon les revendications 1 à 5, **caractérisées en ce que** le revêtement superficiel présente une teneur en silicate de 2 à 5 % en poids.

7. Particules composites à écoulement libre, inhibitrices de croissance des plantes selon au moins l'une des revendications précédentes, **caractérisées en ce que** la composition du revêtement superficiel comprend en outre au moins un composant colorant inorganique et/ou organique.

8. Utilisation de particules composites à écoulement libre, inhibitrices de croissance des plantes, consistant en un matériau support minéral inorganique à base de silicium, qui présente une granulométrie moyenne de 0,01 µm à 5 mm, et en un revêtement superficiel inorganique, entourant au moins partiellement le matériau support minéral inorganique, le revêtement qui comprend au moins un composé silicate alcalin, choisi parmi le silicate de sodium, le silicate de potassium ou le silicate de lithium et/ou un mélange de ceux-ci, le revêtement superficiel comprenant au moins un composant silicate, chimiquement réticulé au matériau support, en une quantité de 1 à 10 % en poids, le revêtement superficiel présentant une épaisseur moyenne de couche de 1 nm à 1000 µm, un composant ionique supplémentaire du revêtement superficiel, constitué de Na⁺, de K⁺ ou de Li⁺ ou d'un mélange de ceux-ci, étant disposé d'une manière mobile dans un environnement aqueux, et le pH des particules composites étant en présence d'eau compris dans la plage de 9 à 12, pour utilisation en tant que matériau de remplissage pour joints dans le domaine du pavage, dans le domaine des carreaux de sol, pour utilisation en tant que constituants supplémentaires dans les fixations des allées gravelées, gravillonnées ou empierrées, ou de mélanges de celles-ci.

9. Utilisation de particules composites à écoulement libre, inhibitrices de croissance des plantes selon la revendication 8, **caractérisée en ce que** les particules composites peuvent être introduites dans des joints entre des pavés, des carreaux de sol ou des fixations pour trottoirs, et en cas de pluie peuvent être mélangées à de l'eau, de façon à provoquer de ce fait le détachement, à partir du revêtement superficiel, des composants ioniques mobiles.

10. Utilisation de particules composites à écoulement libre, inhibitrices de croissance des plantes selon la revendication 7, **caractérisée en ce que** le détachement des composants ioniques, dans un environnement aqueux, provoque une élévation du pH.

11. Utilisation de particules composites à écoulement libre, inhibitrices de croissance des plantes selon la revendication 10, **caractérisée en ce que** le pH s'élève à une valeur supérieure à 10.

12. Utilisation de particules composites à écoulement libre, inhibitrices de croissance des plantes selon la revendication 11, **caractérisée en ce que** le pH s'élève à une valeur supérieure à 11.
